# FASCICULE DE BREVET EUROPEEN

(11) **EP 1 508 471 B1**
(45) Date de publication et mention de la délivrance du brevet: **15.07.2009**
(21) Numéro de dépôt: 04291966.2
(22) Date de dépôt: 30.07.2004
(51) Int. Cl.: B60N 3/14

(54) **Bouchon chauffant d'allume-cigare électrique et agencement d'un allume-cigare comportant ce bouchon**
Heizstopfen für elektrische Zigarettenanzünder und Einrichtung eines Zigarettenanzünders mit einem solchen Stopfen
Heating plug for electric cigarette lighters and arrangement of a cigarette lighter with such a plug

(30) Priorité: 07.08.2003 FR 0309751
(43) Date de publication de la demande: 23.02.2005
(73) Titulaire: VALEO VISION, 93012 Bobigny Cedex (FR)
(72) Inventeur: Can, Jean-Michel, 31250 Revel (FR); Refouni, Patrick, 81110 Castres (FR); Thibaut, Pascal, 79000 Saint Liguaire (FR)
(74) Mandataire: Hervouet, Sylvie

(56) Documents cités:
- DE-U- 29 621 464
- GB-A- 830 152
- US-A- 1 373 583
- US-A- 1 376 154
- US-A- 1 417 422
- US-A- 2 275 922
- US-A- 2 467 473
- US-A- 2 528 500
- US-A- 3 356 826
- US-A- 5 144 111
- US-B1- 6 188 042
- PATENT ABSTRACTS OF JAPAN vol. 003, no. 088 (M-067), 27 juillet 1979 (1979-07-27) & JP 54 065669 A (SHARP CORP), 26 mai 1979 (1979-05-26)
- PATENT ABSTRACTS OF JAPAN vol. 010, no. 189 (M-494), 3 juillet 1986 (1986-07-03) & JP 61 031817 A (MATSUSHITA ELECTRIC WORKS LTD), 14 février 1986 (1986-02-14)

## Description

L'invention concerne un allume-cigare électrique. L'invention concerne plus particulièrement un bouchon chauffant d'allume-cigare électrique, notamment pour un allume-cigare équipant un véhicule automobile, comportant un corps de bouchon prévu pour être inséré axialement dans un corps de prise femelle complémentaire équipé de bornes de raccordement électrique, un bouton poussoir qui est monté mobile axialement par rapport au corps de bouchon, entre une position neutre et une position enfoncée dans laquelle il provoque la fermeture d'un circuit électrique pour alimenter en courant électrique une résistance de chauffage agencée dans le bouchon, et du type dans lequel la résistance de chauffage comporte une face d'allumage qui est accessible depuis l'extérieur du bouchon, lorsque le bouchon est retiré du corps de prise.

On connaît déjà un bouchon chauffant de ce type, par exemple par le document US-A-5.144.111.

Dans ce document, l'allume-cigare comporte un bouchon chauffant muni d'une résistance électrique de chauffage qui est agencée à l'extrémité axiale inférieure du bouchon chauffant.

Lorsque le bouchon chauffant est inséré dans son corps de prise complémentaire et lorsque le bouton est enfoncé, la résistance vient en contact avec une languette métallique agencée dans le fond du corps de prise, ce qui ferme le circuit d'alimentation électrique du bouchon chauffant.

La résistance est solidaire en déplacement axial d'un disque bimétallique bistable formant bilame de manière que, lorsque la résistance atteint une température déterminée, le bilame rappelle la résistance vers le haut, ce qui provoque l'ouverture du circuit d'alimentation électrique.

La présente invention vise notamment à permettre l'utilisation dans un corps de prise au standard SAE ou dans un corps d'allume-cigare au standard SAE de manière indifférente, et/ou d'améliorer l'ergonomie du bouchon chauffant lors de l'allumage.

En effet, la disposition usuelle de la résistance dans l'axe du bouchon ne permet pas d'utiliser ce bouchon dans un corps de prise car l'échauffement de la résistance peut enflammer celui-ci.

L'invention vise ainsi à proposer un bouchon chauffant susceptible d'être utilisé avec un corps de prise standard S.A.E.

L'invention vise encore à résoudre le problème des cendres qui se déposent dans le fond du corps de prise, après l'allumage.

Dans ce but, l'invention propose un bouchon chauffant d'allume-cigare électrique, notamment du type décrit précédemment, caractérisé en ce que la face d'allumage de la résistance est globalement (substantiellement) parallèle à l'axe d'insertion du bouchon. Il s'agit notamment d'un bouchon chauffant d'allume-cigare électrique (10), notamment pour un allume-cigare et/ou une prise 12 Volts de standard SAE,équipant un véhicule automobile, comportant un corps de bouchon prévu pour être inséré axialement dans un corps de prise femelle complémentaire équipé de bornes de raccordement électrique un bouton poussoir qui est monté mobile axialement par rapport au corps de bouchon , entre une position neutre et une position enfoncée dans laquelle il provoque la fermeture d'un circuit électrique pour alimenter en courant électrique une résistance de chauffage agencée dans le bouchon , et du type dans lequel la résistance de chauffage comporte une face d'allumage qui est accessible depuis l'extérieur du bouchon, lorsque le bouchon est retiré du corps de prise (16), caractérisé en ce que la face d'allumage de la résistance est globalement (substantiellement) parallèle à l'axe d'insertion du bouchon.

Selon d'autres caractéristiques de l'invention :
- le bouchon chauffant comporte un bouclier qui est monté mobile sur le corps de bouchon entre une position de protection dans laquelle le bouclier est interposé transversalement entre la face d'allumage de la résistance et la paroi interne du corps de prise, et une position ouverte dans laquelle le bouclier dégage l'accès à la face d'allumage de la résistance ;
- le bouclier a globalement la forme d'un manchon axial comportant une ouverture susceptible d'être agencée transversalement en vis-à-vis de la face d'allumage de la résistance, de manière à permettre l'accès à la face d'allumage ;
- le corps de bouchon comporte un tronçon en forme de chemise tubulaire qui enveloppe la résistance et qui est muni d'une fenêtre d'accès à la face d'allumage de la résistance ;
- le bouclier est monté coulissant axialement sur la face externe du tronçon en forme de chemise tubulaire du corps de bouchon;
- le bouclier comporte des moyens de coopération par emboîtement élastique avec la paroi interne du corps de prise de manière que, lors de l'extraction axiale du bouchon hors du corps de prise, le bouclier soit retenu axialement à l'intérieur du corps de prise jusqu'à ce que le bouclier occupe sa position ouverte sur le corps de bouchon, puis reste dans cette position sur le corps de bouchon, après l'extraction complète du bouchon hors du corps de prise ;
- le bouchon chauffant comporte un bilame qui provoque la fermeture du circuit d'alimentation électrique de la résistance de chauffage, lorsque le bouton est enfoncé, et qui provoque l'ouverture du circuit d'alimentation électrique de la résistance, lorsque la résistance atteint une température déterminée par effet Joule. Le bilame est de préférence en forme de clip, et il provoque l'ouverture du circuit d'alimentation par sa déformation en se refermant sur lui-même.
- le bilame est prévu pour s'enclencher avec un support conducteur, lorsque le bouton est enfoncé, de manière à fermer le circuit électrique, et le bilame, ou le support conducteur, est lié en déplacement axial au bouton, de manière que la montée en température du bilame par effet Joule provoque l'ouverture du circuit électrique par libération automatique du bilame hors du support et permette le retour du bouton vers sa position neutre.
- le bouchon chauffant comporte un moyen élastique qui rappelle le bouton depuis sa position enfoncée vers sa position neutre ;
- le bouchon chauffant comporte un fusible de protection qui est susceptible de provoquer l'ouverture du circuit électrique d'alimentation de la résistance, notamment en cas de surchauffe provoquée par une action persistante de maintien en position enclenchée du bouchon ;

L'invention propose aussi l'agencement d'un allume-cigare électrique dans un véhicule automobile, caractérisé en ce qu'il comporte un bouchon chauffant réalisé selon les enseignements de l'une quelconque des revendications précédentes et en ce qu'il comporte un corps de prise réalisé selon la norme S.A.E., ainsi que le véhicule automobile comportant au moins un bouchon chauffant au moins un agencement tels que décrits plus haut.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée qui représente schématiquement un allume-cigare électrique comportant un bouchon chauffant réalisé conformément aux enseignements de l'invention et un corps de prise standard ;
- la figure 2 est une vue en coupe axiale qui représente schématiquement le bouchon chauffant de l'allume-cigare de la figure 1 en position complètement sortie par rapport au corps de prise ;
- la figure 3 est une vue similaire à celle de la figure 2 qui représente le bouchon chauffant en position insérée dans le corps de prise et qui représente le bouton poussoir commandant le chauffage de la résistance en position neutre ;
- la figure 4 est une vue similaire à celle de la figure 2 qui représente le bouchon chauffant pendant la phase de chauffage de la résistance, le bouton poussoir occupant sa position enfoncée ;
- la figure 5 est une vue similaire à celle de la figure 2 qui représente le bouchon chauffant au cours de son retrait du corps de prise, après la phase de chauffage de la résistance ;
- la figure 6 est une vue en perspective qui représente schématiquement une partie du circuit d'alimentation du bouchon chauffant.

Pour la description de l'invention, on adoptera à titre non limitatif les orientations verticale et transversale selon le repère V, T indiqué aux figures.

Dans la description qui va suivre, des éléments identiques, similaires ou analogues seront désignés par les mêmes chiffres de référence.

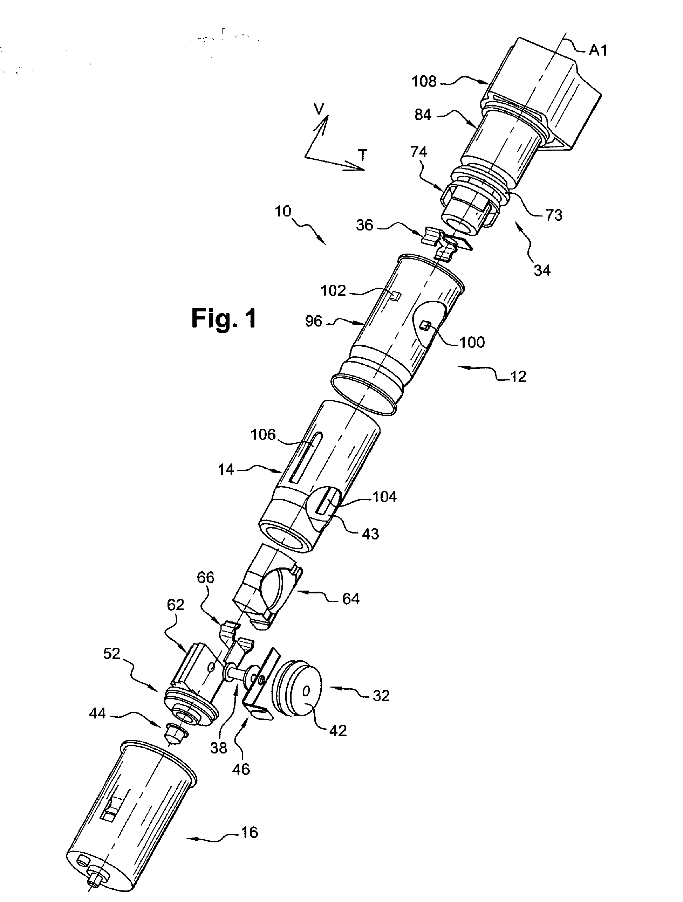

Sur la figure 1, on a représenté un allume-cigare électrique 10 pour véhicule automobile qui est réalisé conformément aux enseignements de l'invention.

L'allume-cigare 10 est constitué essentiellement par un bouchon chauffant 12 dont le corps 14 est prévu pour être inséré axialement A1 dans un corps de prise femelle complémentaire 16 équipant le véhicule.

L'axe d'insertion A1 du bouchon chauffant 12 est ici vertical.

Le corps de prise 16 est raccordé au circuit électrique du véhicule, de manière qu'il puisse alimenter le bouchon chauffant 12 en courant électrique.

De préférence, le corps de prise 16 est réalisé selon la norme S.A.E. J563 définissant le diamètre interne du corps comme étant de 20.93 à 21.01 mm.

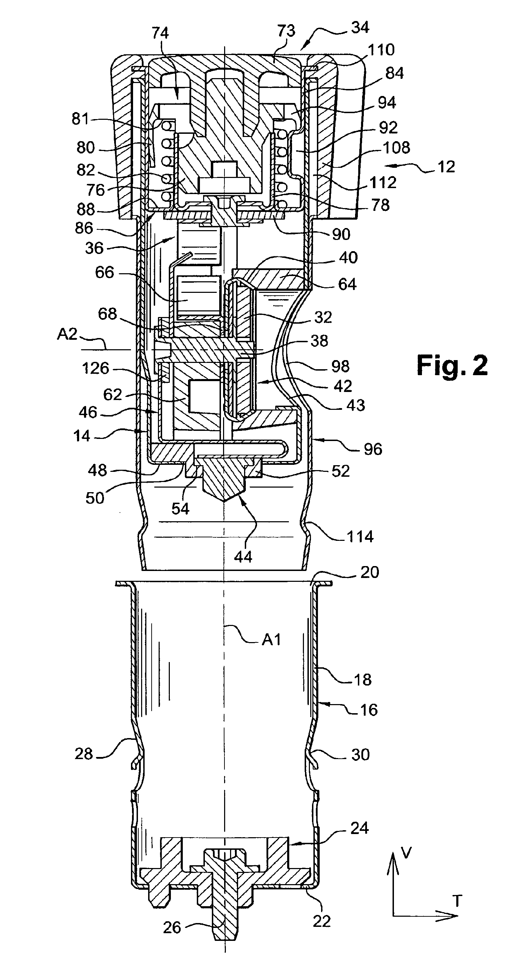

En considérant notamment la figure 2, le corps de prise 16 comporte une paroi principale métallique 18 globalement tubulaire qui délimite, à son extrémité axiale supérieure, une ouverture 20 et qui comporte, à son extrémité axiale inférieure, une paroi transversale de fond 22.

Un socle 24 en matériau isolant électrique est monté dans la paroi de fond 22, et une vis de contact électrique 26 est montée dans le socle 24, de manière que la vis 26 soit isolée électriquement par rapport à la paroi principale 18 du corps de prise 16.

La vis de contact 26 forme ici une borne de raccordement électrique positive.

La paroi principale 18 est quant à elle raccordée à la masse du circuit électrique du véhicule, de sorte qu'elle forme une borne de raccordement électrique négative.

La paroi principale 18 comporte deux languettes élastiques 28, 30, formées par découpage, qui sont diamétralement opposées et qui s'étendent globalement axialement vers le bas. Leur fonction sera expliquée par la suite.

Selon le mode de réalisation représenté ici, le corps de bouchon 14 a globalement la forme d'une chemise tubulaire.

Le corps de bouchon 14 comporte, dans son tronçon inférieur une résistance électrique de chauffage 32, et dans son tronçon supérieur un bouton poussoir 34 qui commande l'enclenchement d'un bilame 36 de manière à provoquer la fermeture du circuit d'alimentation électrique de la résistance 32.

De manière connue, la résistance 32 est constituée par une bande métallique enroulée en spirale autour d'un rivet 38 et agencée dans une cuvette 40.

Le côté ouvert de la cuvette 40 délimite une face globalement plane d'allumage 42 de la résistance 32 et en forme de disque.

Conformément aux enseignements de l'invention, la face d'allumage 42 est globalement parallèle à l'axe d'insertion A1.

Selon le mode de réalisation représenté ici, le rivet 38 s'étend suivant une direction radiale A2 par rapport à l'axe d'insertion A1 et la face d'allumage 42 est sensiblement perpendiculaire à l'axe A2 du rivet 38.

Dans la suite de la description, on utilisera à titre non limitatif une orientation radiale de l'arrière vers l'avant, suivant l'axe A2 du rivet 38, qui correspond à une orientation de la gauche vers la droite en considérant la figure 2.

Le corps de bouchon 14 comporte, radialement en vis-à-vis de la face d'allumage 42, une fenêtre d'accès 43.

De préférence, la face d'allumage 42 est décalée radialement vers l'intérieur du corps de bouchon 14, par rapport à la fenêtre d'accès 43.

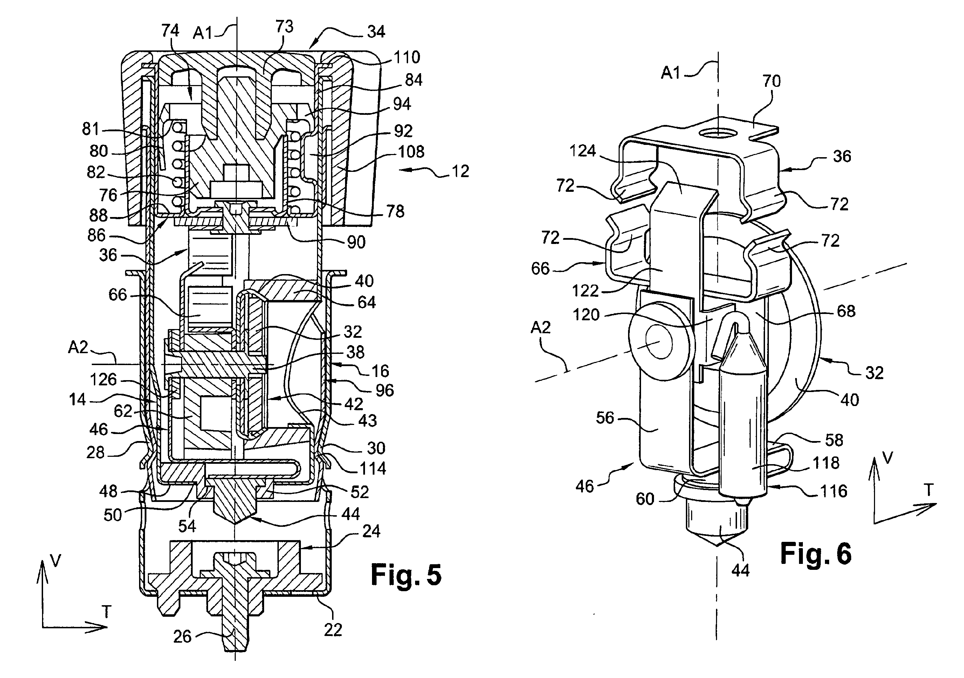

Comme on peut le voir notamment sur la figure 6, le rivet 38 est relié électriquement à un plot de contact 44 agencé à l'extrémité inférieure du corps de bouchon 14 par l'intermédiaire d'une lame conductrice 46.

Le corps de bouchon 14 comporte, à son extrémité axiale inférieure, une paroi transversale 48 munie d'une ouverture centrale 50 dans laquelle est agencée un centreur annulaire 52 en matériau isolant.

Le plot de contact 44 est monté coulissant axialement dans le trou du centreur 52 et il comporte une surface radiale annulaire de butée 54, orientée vers le bas, qui vient en appui axialement contre un épaulement du centreur 52.

La lame conductrice 46 comporte ici un premier tronçon 56 qui s'étend verticalement vers le bas, depuis l'extrémité axiale arrière du rivet 38, et un second tronçon 58 qui s'étend radialement vers l'avant, depuis l'extrémité inférieure du premier tronçon 56, et qui est replié sur lui-même de manière à former deux branches superposées verticalement, l'extrémité libre 60 du second tronçon 58 étant fixée sur la face transversale supérieure du plot de contact 44.

Le second tronçon 58 forme donc une lame ressort qui permet un débattement axial du plot de contact 44 en vue d'un rattrapage de jeu axial avec le corps de prise 16.

Le rivet 38 est ici monté dans une plaque de support 62 qui est fixe par rapport au corps de bouchon 14.

La plaque de support 62 est réalisée en matériau isolant, par exemple en céramique.

Avantageusement, une bague isolante 64 coaxiale au rivet 38 est agencée autour de la résistance 32, depuis le bord extérieur de la cuvette 40 jusqu'au bord de la fenêtre d'accès 43, de manière à minimiser la diffusion, à l'intérieur du corps de bouchon 14, de la chaleur provenant de la résistance 32.

La bague isolante 64 est par exemple réalisée en céramique.

Un support conducteur 66, complémentaire du bilame 36, est agencé au-dessus de la plaque de support 62.

Le support conducteur 66 est ici constitué d'une lame métallique en forme de "U" comportant une patte verticale de fixation et de liaison électrique 68 perpendiculaire au rivet 38.

La patte verticale 68 est intercalée ici entre la face verticale avant de la plaque de support 64 et la face arrière de la cuvette 40.

Le support conducteur 66 est donc fixe par rapport au corps de bouchon 14, alors que le bilame 36 est fixé sur le bouton poussoir 34 qui est mobile par rapport au corps de bouchon 14.

Bien entendu, selon une variante de réalisation (non représentée), le bilame 36 est fixe par rapport au corps de bouchon 14 et le support conducteur 66 est mobile par rapport au corps de bouchon 14.

Le bilame 36 est constitué d'une lame bimétallique en forme de "U" inversé comportant une patte transversale supérieure trouée 70.

A température ambiante, le bilame 36 est prévu pour s'enclencher par emboîtement élastique dans le support conducteur 66.

A cet effet, les extrémités libres 72 des branches du support conducteur 66 et du bilame 36 comportent chacune des bossages transversaux prévus pour permettre la retenue axiale du bilame 36 dans le support conducteur 66, à température ambiante.

Le bouton poussoir 34 comporte ici un disque supérieur d'appui 73 qui est fixé dans la face transversale supérieure d'un embout isolant 74.

L'embout isolant 74 comporte un noyau 76 sensiblement cylindrique qui s'étend axialement vers le bas et qui est emmanché dans un porte-bilame tubulaire 78.

Le bilame 36 est riveté, par sa patte transversale 70, sur la face transversale inférieure du porte-bilame 78.

L'embout isolant 74 comporte ici, à son extrémité axiale supérieure, une jupe cylindrique 80 qui s'étend axialement vers le bas, le long de la paroi cylindrique externe du noyau 76.

La portion de l'embout isolant 74 qui relie la jupe cylindrique 80 au noyau 76 forme une surface radiale d'appui 81 orientée vers le bas pour un ressort hélicoïdal de compression 82.

Le bouton poussoir 34 est monté mobile à l'intérieur d'une douille de guidage 84 sensiblement cylindrique.

La douille de guidage 84 est emmanchée dans le tronçon supérieur du corps de bouchon 14, de manière qu'elle soit fixe par rapport au corps de bouchon 14.

La douille de guidage 84 comporte, à son extrémité axiale inférieure, une collerette interne 86 qui délimite une surface radiale d'appui 88 orientée vers le haut pour le ressort 82.

Le ressort 82 est monté comprimé axialement entre la surface d'appui 88 de la douille de guidage 84 et la surface d'appui 81 de l'embout isolant 74, de manière à rappeler élastiquement le bouton poussoir 34 vers le haut.

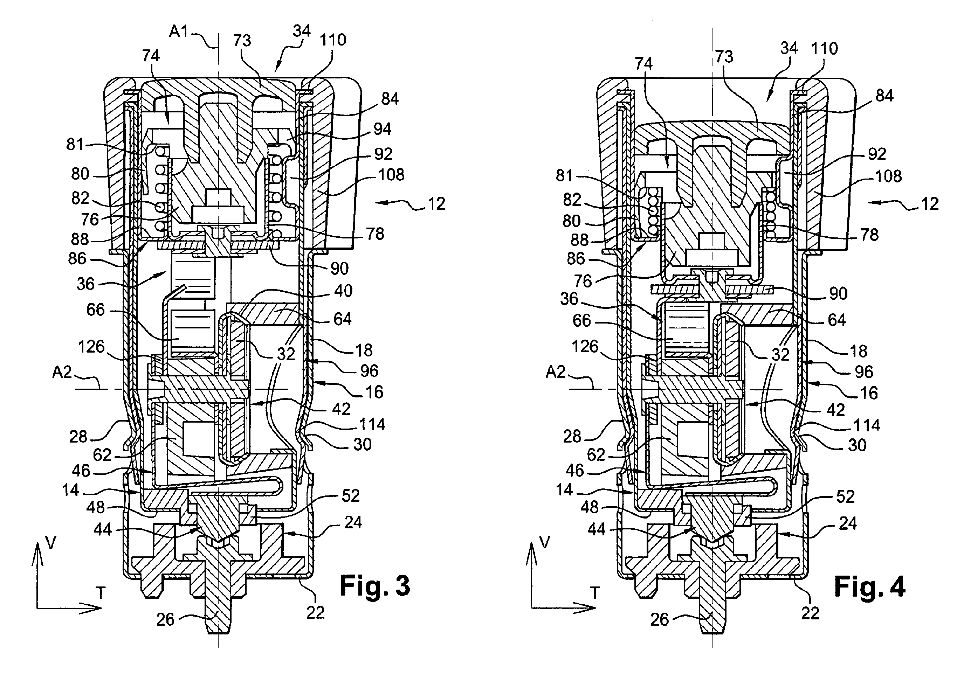

Le bouton poussoir 34 est donc mobile axialement entre une position haute, ou position neutre, qui est représentée sur les figures 2, 3, et 5, et une position basse, ou position enfoncée, qui est représentée sur la figure 4, dans laquelle le bilame 36 est enclenché dans son support 66.

Selon le mode de réalisation représenté ici, le bouton poussoir 34 comporte une plaque isolante 90 qui est interposée axialement entre le bilame 36 et la face transversale inférieure du porte-bilame 78, et qui vient en butée axiale contre la face radiale inférieure de la collerette 86, lorsque le bouton poussoir 34 est en position neutre.

Avantageusement, la paroi cylindrique interne de la douille de guidage 84 comporte des nervures axiales 92 qui coopèrent avec des encoches axiales 94 associées de la jupe cylindrique 80, de manière à immobiliser angulairement et guider axialement le bouton poussoir 34 par rapport au corps de bouchon 14.

Selon une autre caractéristique avantageuse de l'invention, le bouchon chauffant 12 comporte un bouclier thermique 96 formant obturateur qui est monté mobile sur le corps de bouchon 14 entre une position de protection et une position ouverte.

Dans la position de protection, qui est représentée sur les figures 3, 4, et 5, le bouclier 96 est interposé radialement entre la face d'allumage 42 de la résistance 32 et la face interne de la paroi principale 18 du corps de prise 16.

Dans la position ouverte, qui est représentée sur la figure 2, le bouclier 96 dégage l'accès à la face d'allumage 42 de la résistance 32.

Selon le mode de réalisation représenté ici, le bouclier 96 a globalement la forme d'un manchon axial comportant une ouverture 98 susceptible d'être agencée radialement en vis-à-vis de la face d'allumage 42 de la résistance 32.

De préférence, le bouclier 96 est monté coulissant axialement sur la face externe du corps de bouchon 14, la position de protection correspondant à une position haute sur le corps de bouchon 14, et la position ouverte correspondant à une position basse sur le corps de bouchon 14.

Comme on peut le voir sur la figure 1, le bouclier 96 comporte, sur sa face axiale interne, deux ergots 100, 102 de guidage et de butée qui sont diamétralement opposés et qui coopèrent avec deux rainures ou lumières axiales associées 104, 106 réalisées dans le corps de bouchon 14.

Selon le mode de réalisation représenté ici, le bouchon chauffant 12 comporte une bague de préhension 108 qui est agencée autour du tronçon supérieur du corps de bouchon 14.

L'extrémité axiale supérieure de la bague de préhension 108 est moulée sur une collerette externe 110 agencée à l'extrémité axiale supérieure de la douille de guidage 84.

La bague de préhension 108 délimite radialement, avec la face axiale externe du corps de bouchon 14, un espace tubulaire de guidage 112 pour le tronçon supérieur du bouclier 96.

Lorsque le bouchon chauffant 12 est inséré dans le corps de prise 16, la bague de préhension 108 est prévue ici pour venir en appui axial, par son extrémité inférieure, contre l'extrémité supérieure du corps de prise 16.

Le bouclier 96 comporte, dans la face axiale externe de son tronçon inférieur, une rainure radiale annulaire 114 qui est susceptible de coopérer par emboîtement avec les languettes élastiques 28, 30 du corps de prise 16, de manière à retenir axialement le bouclier 96 dans le corps de prise 16, lorsque le bouchon chauffant 12 est inséré dans le corps de prise 16.

Le bouclier 96 est ici réalisé en métal, de manière à conduire l'électricité entre le corps de bouchon 14 et le corps de prise 16.

Avantageusement, le bouchon chauffant 12 comporte un fusible de protection 116 qui est susceptible de provoquer l'ouverture du circuit électrique d'alimentation de la résistance 32.

Selon le mode de réalisation représenté ici, le fusible 116 comporte un corps principal cylindrique 118 qui s'étend à l'intérieur du corps de bouchon 14, parallèlement au tronçon vertical 56 de la lame conductrice 46.

L'extrémité axiale inférieure du corps principal de fusible 118 est en contact électrique avec la paroi transversale 48 du corps de bouchon 14 et l'extrémité axiale supérieure du corps principal de fusible 118 est reliée électriquement à une patte 120 de liaison électrique et de fixation appartenant à une languette conductrice 122.

La languette conductrice 122 est perpendiculaire au rivet 38 et elle s'étend axialement vers le haut.

L'extrémité axiale supérieure de la languette conductrice 122 est recourbée vers l'avant de manière à former une patte élastique 124 susceptible d'assurer le contact électrique avec le bilame 36, lorsque celui-ci s'enclenche avec son support 66.

La languette conductrice 122 est intercalée radialement entre la lame conductrice 46 et la face verticale arrière de la plaque de support 62.

Une rondelle isolante 126 est interposée radialement entre la languette conductrice 122 et la lame conductrice 46.

On explique maintenant le fonctionnement de l'allume-cigare électrique 10 équipé du bouchon chauffant 12 selon l'invention.

Lorsque l'allume-cigare 10 n'est pas utilisé, le bouchon chauffant 12 est inséré dans le corps de prise 16, le bouton poussoir 34 occupant sa position neutre, tel que représenté sur la figure 3.

Le circuit électrique d'alimentation de la résistance chauffante 32 est alors ouvert, puisque le bilame 36 n'est pas en contact avec son support 66.

Lorsque le bouchon chauffant 12 est inséré dans le corps de prise 16, le bouclier 96 occupe sa position de protection et le bouclier 96 est emboîté dans le corps de prise 16 au moyen des languettes élastiques 28, 30.

Avantageusement, le tronçon inférieur du corps de bouchon 14 a un diamètre inférieur à son tronçon supérieur ce qui favorise l'insertion du bouchon 12 dans le corps de prise 16 sans frottement et donc sans usure prématurée du matériau.

Lorsqu'un utilisateur souhaite utiliser l'allume-cigare 10, il exerce une pression axiale dirigée vers le bas sur le bouton poussoir 34, en comprimant le ressort 82, jusqu'à l'enclenchement du bilame 36 dans son support 66, comme illustré sur la figure 4.

On note que la coopération des nervures 92 de la douille de guidage 84 avec les encoches 94 de l'embout isolant 74 permet de garantir un positionnement angulaire correct du bilame 36 par rapport à son support conducteur 66.

Avantageusement, les nervures 92 et les encoches 94 associées sont réparties angulairement de manière non régulière autour de l'axe A1, de manière à remplir une fonction de détrompage, lors du montage du bouton poussoir 34 dans le bouchon chauffant 12.

L'enclenchement du bilame 36 avec son support 66 provoque donc la fermeture du circuit électrique d'alimentation de la résistance de chauffage 32 de la manière suivante.

Le courant électrique provenant du circuit électrique du véhicule est amené à l'allume-cigare 10 par la vis de contact 26.

Le courant circule ensuite successivement à travers : le plot de contact 44, la lame conductrice 46, le rivet 38, la résistance 32, la cuvette 40, le support conducteur 66, le bilame 36, la languette conductrice 122, le fusible 116, le corps de bouchon 14, le bouclier 96, et enfin le corps de prise 16 qui est relié à la masse du véhicule.

Comme on peut le voir sur les figures 3 et 4, le montage à coulissement axial du plot de contact 44 dans le corps de bouchon 14, et son rappel élastique vers le bas grâce à l'élasticité du second tronçon 58 de la lame conductrice 46, permet d'assurer le contact électrique avec la vis de contact 26, pour différentes valeurs de jeu axial entre le corps de bouchon 14 et le corps de prise 16.

La fermeture du circuit électrique d'alimentation de la résistance 32 provoque l'élévation en température de la résistance 32 par effet Joule.

Grâce à la présence du bouclier thermique 96 en position de protection, qui obture la fenêtre 43 d'accès à la face de chauffage 42, la résistance 32 peut chauffer sans détériorer le corps de prise 16.

Lorsque la résistance 32 atteint une température déterminée, suffisante pour l'allumage d'une cigarette, le bilame 36 atteint, par effet Joule, une température déterminée qui provoque sa déformation, de sorte qu'il n'est plus retenu axialement par son support conducteur 66.

La montée en température du bilame 36 provoque donc l'ouverture du circuit électrique d'alimentation de la résistance 32 par libération automatique du bilame 36 hors du support conducteur 66.

Le ressort 82 peut alors se détendre en provoquant le retour du bouton poussoir 34 de sa position enfoncée vers sa position neutre, comme illustré par la figure 5.

Le retour du bouton poussoir 34 dans sa position neutre avertit l'utilisateur de la fin de la chauffe de la résistance 32. L'utilisateur peut alors retirer le bouchon chauffant 12 du corps de prise 16, en le saisissant par la bague de préhension 108.

Comme l'illustre la figure 5, pendant le retrait axial du bouchon chauffant 12, le bouclier 96 est dans un premier temps retenu axialement dans sa position emboîtée, de sorte que le corps de bouchon 14 coulisse axialement vers le haut, par rapport au bouclier 96 qui reste fixe par rapport au corps de prise 16.

Lorsque les ergots 100, 102 du bouclier 96 arrivent en butée axiale dans les extrémités des lumières associées 104, 106 du corps de bouchon 14, ce qui correspond à la vue de la figure 2, alors l'effort axial exercé par l'utilisateur pour sortir le bouchon chauffant 12 provoque la libération du bouclier 96 hors du corps de prise 16.

Le bouclier 96 occupe alors sa position ouverte sur le corps de bouchon 14, de sorte que l'utilisateur a accès à la face de chauffage 42, ce qui lui permet d'allumer une cigarette.

Avantageusement, le bouclier 96 est maintenu dans sa position ouverte par frottements contre le corps de bouchon 14 et/ou contre la bague de préhension 108.

Pour des raisons de sécurité, dans le cas où le bouton-poussoir 34 serait maintenu en position enfoncée pendant la phase de chauffage de la résistance 32, après la libération du bilame 36, alors le fusible 116 se déclenche ce qui provoque l'ouverture du circuit électrique d'alimentation de la résistance 32, et donc l'arrêt du chauffage.

Selon une variante de réalisation (non représentée), le fusible 116 peut être monté de manière amovible dans le bouchon chauffant 12, de sorte qu'en cas de surchauffe il soit possible de ne changer que le fusible 116 et non pas le bouchon 12 en entier.

On constate que l'ergonomie d'emploi du bouchon chauffant 12 selon l'invention est meilleure que celle d'un bouchon chauffant selon l'état de la technique.

En effet, les mouvements mis en oeuvre pour l'allumage présentent de grandes similitudes avec ceux mis en oeuvre lors de l'allumage avec un briquet, puisque le bouchon chauffant 12 peut être tenu verticalement comme un briquet, et la cigarette approchée sensiblement radialement de la face d'allumage 42.

L'amélioration de l'ergonomie permet notamment de minimiser les risques de voir l'utilisateur lâcher le bouchon chauffant 12 lorsqu'il le manipule.

La nouvelle ergonomie du bouchon chauffant 12 permet aussi de diminuer les risques de brûlure sur le visage de l'utilisateur, en cas de freinage brusque par exemple.

De plus, la face d'allumage 42 est agencée très en retrait radialement, par rapport à l'enveloppe cylindrique externe du bouchon 12, constituée ici par le bouclier 96, ce qui diminue les risques de contact inopiné entre la face d'allumage 42 et un élément extérieur au bouchon 12.

Avantageusement, la bague de préhension 108 du bouchon chauffant 12 est conformée extérieurement de manière à fournir à l'utilisateur une indication sur la position angulaire de la face d'allumage 42 par rapport à l'axe A1 du bouchon chauffant 12.

Un autre avantage du bouchon chauffant 12 selon l'invention est la présence du bouclier 96 qui exerce une fonction supplémentaire de pare-cendres.

En effet, après l'allumage d'une cigarette, il peut rester des cendres sur la face d'allumage 42 de la résistance 32.

Dans un allume-cigare selon l'état de la technique, lorsque le bouchon chauffant est replacé dans le corps de prise, les cendres tendent à se déposer dans le fond du corps de prise.

Avec le bouchon chauffant 12 selon l'invention, lorsque le bouchon chauffant 12 est replacé dans le corps de prise 16, le bouclier 96 ferme la fenêtre d'accès 43 à la résistance 32, de sorte que les cendres sont enfermées à l'intérieur du corps de bouchon 14.

Le bouchon chauffant 12 selon l'invention présente l'avantage de pouvoir être agencé dans n'importe quel corps de prise 16 normalisé S.A.E., sans qu'il soit nécessaire d'adapter ce corps de prise 16 à la fonction d'allume-cigare. Et ceci est un avantage majeur sur le plan industriel : en effet, au lieu de fabriquer des produits entièrement différents selon qu'il s'agit de produits à fonction allume cigare ou de produits de type prise électrique (12V), il devient possible avec l'invention de proposer un corps unique qui sert indifféremment de prise électrique ou de corps d'allume cigare, la différenciation ne se faisant que sur le bouchon que l'on ajoute si on veut la fonctionnalité allume cigare.

## Revendications

1. Bouchon chauffant (12) d'allume-cigare électrique (10), notamment pour un allume-cigare et/ou une prise 12 Volts équipant un véhicule automobile, comportant un corps de bouchon (14) prévu pour être inséré axialement (A1 dans un corps de prise femelle complémentaire (16) équipé de bornes de raccordement électrique (18, 26), un bouton poussoir (34) qui est monté mobile axialement par rapport au corps de bouchon (14), entre une position neutre et une position enfoncée dans laquelle il provoque la fermeture d'un circuit électrique pour alimenter en courant électrique une résistance de chauffage (32) agencée dans le bouchon (12), et du type dans lequel la résistance de chauffage (32) comporte une face d'allumage (42) qui est accessible depuis l'extérieur du bouchon (12), lorsque le bouchon (12) est retiré du corps de prise (16),
**caractérisé en ce que** la face d'allumage (42) de ta résistance (32) est globalement parallèle à l'axe d'insertion (A1) du bouchon (12) et **en ce qu'**il comporte un bilame (36) qui provoque la fermeture du circuit d'alimentation électrique de la résistance de chauffage (32), lorsque le bouton (34) est enfoncé, et qui provoque l'ouverture du circuit d'alimentation électrique de la résistance (32), lorsque la résistance (32) atteint une température déterminée par effet Joule.

2. Bouchon chauffant (12) selon la revendication précédente, **caractérisé en ce qu'**il comporte un bouclier (96) qui est monté mobile sur le corps de bouchon (14) entre une position de protection dans laquelle le bouclier (96) est interposé transversalement entre la face d'allumage (42) de la résistance (32) et la paroi interne du corps de prise (16), et une position ouverte dans laquelle le bouclier (96) dégage l'accès à la face d'allumage (42) de la résistance (32).

3. Bouchon chauffant (12) selon la revendication précédente, **caractérisé en ce que** le bouclier (96) a globalement la forme d'un manchon axial comportant une ouverture (98) susceptible d'être agencée transversalement en vis-à-vis de la face d'allumage (42) de la résistance (32), de manière à permettre l'accès à la face d'allumage (42).

4. Bouchon chauffant (12) selon l'une quelconque des revendications 2 ou 3, **caractérisé en ce que** le corps de bouchon (14) comporte un tronçon en forme de chemise tubulaire qui enveloppe la résistance (32) et qui est muni d'une fenêtre d'accès (43) à la face d'allumage (42) de la résistance (32).

5. Bouchon chauffant (12) selon les revendications 3 et 4 prises en combinaison, **caractérisé en ce que** le bouclier (96) est monté coulissant axialement sur la face externe du tronçon en forme de chemise tubulaire du corps de bouchon (14).

6. Bouchon chauffant (12) selon la revendication précédente, **caractérisé en ce que** le bouclier (96) comporte des moyens d'emboîtement élastique (114) avec la paroi interne (18) du corps de prise (18) de manière que, lors de l'extraction axiale du bouchon (12) hors du corps de prise (16), le bouclier (96) soit retenu axialement à l'intérieur du corps de prise (16) jusqu'à ce que le bouclier (96) occupe sa position ouverte sur le corps de bouchon (14), puis reste dans cette position sur le corps de bouchon (16), après l'extraction complète du bouchon (12) hors du corps de prise (16).

7. Bouchon chauffant (12) selon l'une des revendications précédentes, **caractérisé en ce que** le bilame (36) est prévu pour s'enclencher avec un support conducteur (66), lorsque le bouton (34) est enfoncé, de manière à fermer le circuit électrique, et **en ce que** le bilame (36), ou le support conducteur (66), est lié en déplacement axial au bouton (34), de manière que la montée en température du bilame (36) par effet Joule provoque l'ouverture du circuit électrique par libération automatique du bilame (36) hors du support (66) et permettre le retour du bouton (34) vers sa position neutre.

8. Bouchon chauffant selon l'une des revendications précédentes, **caractérisé en ce que** le bilame est en forme de clip, et **en ce qu'**il provoque l'ouverture du circuit d'alimentation par sa déformation en se refermant sur lui-même.

9. Bouchon chauffant (12) selon l'une quelconque des revendications précédentes, **caractérisé en ce qu'**il comporte un moyen élastique (82) qui rappelle le bouton (34) depuis sa position enfoncée vers sa position neutre.

10. Bouchon chauffant (12) selon l'une quelconque des revendications précédentes, **caractérisé en ce qu'**il comporte un fusible de protection (116) qui est susceptible de provoquer l'ouverture du circuit électrique d'alimentation de la résistance (32).

11. Agencement d'un allume-cigare électrique (10) dans un véhicule automobile, **caractérisé en ce qu'**il comporte un bouchon chauffant (12) réalisé selon les enseignements de l'une quelconque des revendications précédentes et **en ce qu'**il comporte un corps de prise (16) réalisé selon la norme S.A.E.,

12. Véhicule automobile **caractérisé en ce qu'**il comporte au moins un bouchon chauffant (12) selon l'une au moins des revendications 1 à 10 ou au moins un agencement selon la revendication11.

## Claims

1. Heated plug (12) for an electric cigar lighter (10), in particular for a 12 volt cigar lighter and/or socket equipping a motor vehicle, comprising a plug body (14) designed to be inserted axially (A1) in a complementary female socket body (16) equipped with electrical connection terminals (18, 26), a push button (36) mounted so as to be able to move axially with respect to the plug body (14), between a neutral position and a pressed-in position in which it causes the closure of an electrical circuit for supplying electric current to a heating element (32) arranged in the plug (12), and of the type in which the heating element (32) comprises a lighting face (42) accessible from the outside of the plug (12) when the plug (12) is removed from the socket body (16),
**characterised in that** the lighting face (42) of the element (32) is roughly parallel to the insertion axis (A1) of the plug (32) and **in that** it comprises a bimetallic strip (36) that causes the closure of the electrical supply circuit for the heating element (32) when the button (34) is pressed in and causes the opening of the electrical supply circuit for the element (32) when the element (32) reaches a given temperature by Joule effect.

2. Heated plug (12) according to the preceding claim, **characterised in that** it comprises a shield (96) that is mounted so as to be able to move on the plug body (14) between a protection position in which the shield (96) is interposed transversely between the lighting face (42) of the element (32) and the internal wall of the socket body (16), and an open position in which the shield (96) leaves access clear to the lighting face (42) of the element (32).

3. Heated plug (12) according to the preceding claim, **characterised in that** the shield (96) has roughly the form of an axial sleeve having an opening (98) able to be arranged transversely opposite the lighting face (42) of the element (32) so as to allow access to the lighting face (42).

4. Heated plug (12) according to either one of claims 2 or 3, **characterised in that** the plug body (14) has a section in the form of a tubular jacket that encloses the element (32) and is provided with an access window (43) to the lighting face (42) of the element (32).

5. Heated plug (12) according to claims 3 and 4 taken in combination, **characterised in that** the shield (96) is mounted so as to slide axially on the internal face of the section in the form of a tubular jacket of the plug body (14).

6. Heated plug (12) according to the preceding claim, **characterised in that** the shield (96) has means (114) of elastic nesting with the internal wall (18) of the socket body (16) so that, when the plug (14) is extracted axially out of the socket body (16), the shield (96) is retained axially inside the socket body (16) until the shield (96) occupies its open position on the plug body (14) and then remains in this position on the plug body (16) after the plug (12) is completely extracted out of the socket body (16).

7. Heated plug (12) according to one of the preceding claims, **characterised in that** the bimetallic strip (36) is designed to engage with a conductive support (66), when the button (34) is pressed in, so as to close the electrical circuit, and **in that** the bimetallic strip (36) or the conductive support (66) is connected in axial movement to the button (34), so that the temperature rise in the bimetallic strip (36) by Joule effect causes the opening of the electrical circuit by automatic release of the bimetallic strip (36) out of the support (66) and enables the button (34) to return to its neutral position.

8. Heated plug (12) according to one of the preceding claims, **characterised in that** the bimetallic strip (36) is in the form of a clip and **in that** it causes the opening of the supply circuit by its deformation by closing on itself.

9. Heated plug (12) according to any one of the preceding claims, **characterised in that** it comprises an elastic means (82) that returns the button (34) from its pressed-in position to its neutral position.

10. Heated plug (12) according to any one of the preceding claims,
**characterised in that** it comprises a protection fuse (116) that is able to cause the opening of the electrical supply circuit for the element (32).

11. Arrangement of an electric cigar lighter (10) in a motor vehicle, **characterised in that** it comprises a heated plug (12) produced according to the teachings of any one of the preceding claims and **in that** it comprises a socket body (16) produced in accordance with the S.A.E. standard.

12. Motor vehicle, **characterised in that** it comprises at least one heated plug (12) according to at least one of claims 1 to 10 or at least an arrangement according to claim 11.

## Patentansprüche

1. Aufheizbarer Stecker (12) eines elektrischen Zigarettenanzünders (10), insbesondere für einen Zigarettenanzünder und/oder eine 12-Volt-Steckdose, mit der ein Kraftfahrzeug ausgestattet ist, mit einem Steckerkorpus (14), der zum axialen Einstecken (A1) in eine mit Anschlussklemmen (18, 26) versehene komplementäre Steckdose (16) vorgesehen ist, einem Druckknopf (34), der bezüglich des Steckerkorpus (14) zwischen einer Ruhestellung und einer eingedrückten Stellung axial beweglich angebracht ist, in der er das Schließen eines elektrischen Stromkreises bewirkt, um einen in dem Stecker (12) angeordneten Heizwiderstand (32) mit Strom zu speisen, und von der Art, bei dem der Heizwiderstand (32) eine Zündfläche (42) aufweist, die von der Außenseite des Steckers (12) zugänglich ist, wenn der Stecker (12) aus der Steckdose (16) herausgezogen ist,
**dadurch gekennzeichnet, dass** die Zündfläche (42) des Widerstands (32) zur Einsteckachse (A1) des Steckers (12) allgemein parallel ist, und dass er einen Bimetallstreifen (36) umfasst, der das Schließen des Speisestromkreises des Heizwiderstands (32) bewirkt, wenn der Knopf (34) eingedrückt ist, und der das Öffnen des Speisestromkreises des Widerstands (32) bewirkt, wenn der Widerstand (32) aufgrund des Joule-Effekts eine bestimmte Temperatur erreicht.

2. Aufheizbarer Stecker (12) nach dem vorhergehenden Anspruch,
**dadurch gekennzeichnet, dass** er einen Schild (96) umfasst, der auf dem Steckerkorpus (14) zwischen einer Schutzposition, in welcher der Schild (96) sich quer zwischen der Zündfläche (42) des Widerstands (32) und der Innenwand der Steckdose (16) befindet, und einer geöffneten Position beweglich angebracht ist, in welcher der Schild (96) den Zugang zur Zündfläche (42) des Widerstands (32) freigibt.

3. Aufheizbarer Stecker (12) nach dem vorhergehenden Anspruch,
**dadurch gekennzeichnet, dass** der Schild (96) allgemein die Form einer axialen Hülse hat, mit einer Öffnung (98), die quer gegenüber der Zündfläche (42) des Widerstands (32) derart angeordnet zu werden vermag, dass der Zugang zur Zündfläche (42) möglich ist.

4. Aufheizbarer Stecker (12) nach einem der Ansprüche 2 oder 3,
**dadurch gekennzeichnet, dass** der Steckerkorpus (14) einen Abschnitt in Form einer rohrartigen Ummantelung aufweist, die den Widerstand (32) umgibt und mit einem Zugangsfenster (43) zur Zündfläche (42) des Widerstands (32) versehen ist.

5. Aufheizbarer Stecker (12) nach den Ansprüchen 3 und 4 in Verbindung miteinander,
**dadurch gekennzeichnet, dass** der Schild (96) axial gleitend auf der Außenseite des rohrartigen Ummantelungsabschnitts des Steckerkorpus (14) angebracht ist.

6. Aufheizbarer Stecker (12) nach dem vorhergehenden Anspruch,
**dadurch gekennzeichnet, dass** der Schild (96) Mittel (114) zum elastischen Einstecken in die Innenwand (18) der Steckdose (16) aufweist, derart, dass beim axialen Herausziehen des Steckers (12) aus der Steckdose (16) der Schild (96) innen in der Steckdose (16) axial gehalten wird, bis der Schild (96) seine geöffnete Position auf dem Steckerkorpus (14) einnimmt, und nach dem vollständigen Herausziehen des Steckers (12) aus der Steckdose (16) anschließend in dieser Position auf dem Steckerkorpus (16) verbleibt.

7. Aufheizbarer Stecker (12) nach einem der vorhergehenden Ansprüche,
**dadurch gekennzeichnet, dass** der Bitmetallstreifen (36) dazu vorgesehen ist, bei eingedrücktem Knopf (34) mit einem leitfähigen Träger (66) zu verrasten, so dass der Stromkreis geschlossen wird, und dass der Bimetallstreifen (36) oder der leitfähige Träger (66) zur axialen Verschiebung mit dem Knopf (34) verbunden ist, so dass der Temperaturanstieg des Bimetallstreifens (36) aufgrund des Joule-Effekts das Öffnen des Stromkreises durch automatisches Lösen des Bimetallstreifens (36) von dem Träger (66) bewirkt und die Rückkehr des Knopfs (34) in seine Ruhestellung ermöglicht.

8. Aufheizbarer Stecker (12) nach einem der vorhergehenden Ansprüche,
**dadurch gekennzeichnet, dass** der Bimetallstreifen die Form eines Clips hat, und dass er das Öffnen des Speisestromkreises durch seine Verformung mittels Einrollen auf sich selbst bewirkt.

9. Aufheizbarer Stecker (12) nach einem der vorhergehenden Ansprüche,
**dadurch gekennzeichnet, dass** er ein elastisches Mittel (82) umfasst, das den Knopf (34) aus seiner eingedrückten Stellung in seine Ruhestellung zurückbringt.

10. Aufheizbarer Stecker (12) nach einem der vorhergehenden Ansprüche,
**dadurch gekennzeichnet, dass** er eine Schutzsicherung (116) umfasst, die das Öffnen des Speisestromkreises des Widerstands (32) zu bewirken vermag.

11. Anordnung eines elektrischen Zigarettenanzünders (10) in einem Kraftfahrzeug,
**dadurch gekennzeichnet, dass** sie einen aufheizbaren Stecker (12) umfasst, der nach den Lehren eines der vorhergehenden Ansprüche ausgeführt ist, und dass sie eine nach SAE-Norm ausgeführte Steckdose (16) umfasst.

12. Kraftfahrzeug,
**dadurch gekennzeichnet, dass** es wenigstens einen aufheizbaren Stecker (12) nach wenigstens einem der Ansprüche 1 bis 10 oder wenigstens eine Anordnung nach Anspruch 11 umfasst.
